# EUROPÄISCHE PATENTSCHRIFT

(11) **EP 1 647 423 B1**
(45) Veröffentlichungstag und Bekanntmachung des Hinweises auf die Patenterteilung: **16.01.2008**
(21) Anmeldenummer: 05015404.6
(22) Anmeldetag: 15.07.2005
(51) Int. Cl.: B60G 3/18, B60G 7/00, B60G 3/14

(54) **Hinterradaufhängung für Kraftfahrzeuge**
Rear suspension for motor vehicles
Suspension arrière pour véhicules à moteur

(30) Priorität: 18.10.2004 DE 102004050624
(43) Veröffentlichungstag der Anmeldung: 19.04.2006
(73) Patentinhaber: AUDI AG, 85045 Ingolstadt (DE)
(72) Erfinder: Schmidt, Walter, 86643 Rennertshofen (DE)
(74) Vertreter: Asch, Konrad

(56) Entgegenhaltungen:
- EP-A- 0 331 889
- EP-A- 1 346 854
- DE-A1- 3 307 825
- DE-A1- 3 900 336
- DE-A1- 4 037 608
- PATENT ABSTRACTS OF JAPAN Bd. 2000, Nr. 04, 31. August 2000 (2000-08-31) & JP 2000 025434 A (NISSAN MOTOR CO LTD), 25. Januar 2000 (2000-01-25)
- PATENT ABSTRACTS OF JAPAN Bd. 014, Nr. 277 (M-0985), 15. Juni 1990 (1990-06-15) & JP 02 085003 A (TOYOTA MOTOR CORP), 26. März 1990 (1990-03-26)

## Beschreibung

Die Erfindung betrifft eine Hinterradaufhängung für Kraftfahrzeuge mit einem an einem Hilfsrahmen gelagerten Schräglenker und einem am Schräglenker schwenkbar gelagerten Radträger, dessen Schwenkachse zwecks Erzielung eines gewünschten Eigenlenkverhaltens unter Last für das zu lagernde Rad in zwei Ebenen geneigt ist.

Bekanntlich bewirken Elastizitäten in der Radaufhängung eines Kraftfahrzeuges unter Lasten Änderungen von Vorspur und Sturz der davon betroffenen Räder. Sind Radträger und Schräglenkerachse starr miteinander verbunden so gehen diese beim Auftreten von Längs-und/oder Seitenkräften infolge dem elastischen Nachgeben der an dem Hilfsrahmen angebundenen Schräglenkerachse in Nachspur über. Auch können hierbei unterwünschte Sturzänderungen des Rades auftreten.

Um diesen Nachteil der aus- und einfedernden Rädern zu begegnen ist es bekannt, Schräglenker und Radträger durch zwei Lager mit einander beweglich zu verbinden und über ein am Schräglenker sich abstützendes Stellglied derart zu entkoppeln, dass es beim Federn des Kraftfahrzeuges nicht zu unerwünschten Lenkbewegungen der Hinterräder kommt; vgl. DE 40 37 608 C2.

Es ist ferner bekannt, an dem Radträger eine im Abstand zu seiner Schwenkachse aufgreifende Spurstange vorzusehen, die an dem Hilfsrohren des Kraftfahrzeuges abgestützt ist, vgl. Patent JP 2000 025434 A 4 Abstract of Japan Bd. 2000, Nr. 04, 31. August 2000. Zwar kann hierdurch auf das in dem als Hohlkörper ausgebildeten Schräglenker angeordnete Stellglied verzichtet werden, jedoch ist das gewünschte Eigenlenkverhalten unter Last noch ungenügend.

Der Erfindung liegt die Aufgabe zugrunde, die zuletzt genannte Anordnung zu verbessern.

Diese Aufgabe ist erfindungsgemäß durch die Merkmale des Patentanspruches 1 gelöst.

Weitere Merkmale der Erfindung ergeben sich aus den Unteransprüchen.

Die Ausbildung der Hinterradaufhängung gemäß der Erfindung in der Weise, dass der Durchstoßpunkt der Schwenkachse zwischen Schräglenker und Radträger durch die Fahrbahn in Fahrtrichtung gesehen in einem vorgegebenen Abstand hinter der Mitte des Rades und von hinten gesehen in einem vorgegebenen Abstand außerhalb der Mitte des Rades liegt hat den Vorteil, dass die gewünschten Eigenlenkeigenschaften des Kraftfahrzeuges in signifikanter Weise verbessert werden.

Die Erfindung ist nachfolgend anhand eines in der Zeichnung dargestellte Ausführungsbeispiels beschrieben. Es zeigen:
- Fig. 1: eine isometrische Ansicht einer als Schräglenkerachse ausgebildeten Hinterradaufhängung gemäß der Erfindung;
- Fig. 2: die Schräglenkerachse nach Fig. 1 von der Seite gesehen;
- Fig. 3: die Schräglenkerachse nach Fig. 1 von Hinten gesehen und
- Fig. 4: die Schräglenkerachse nach Fig. 1 von Oben gesehen.

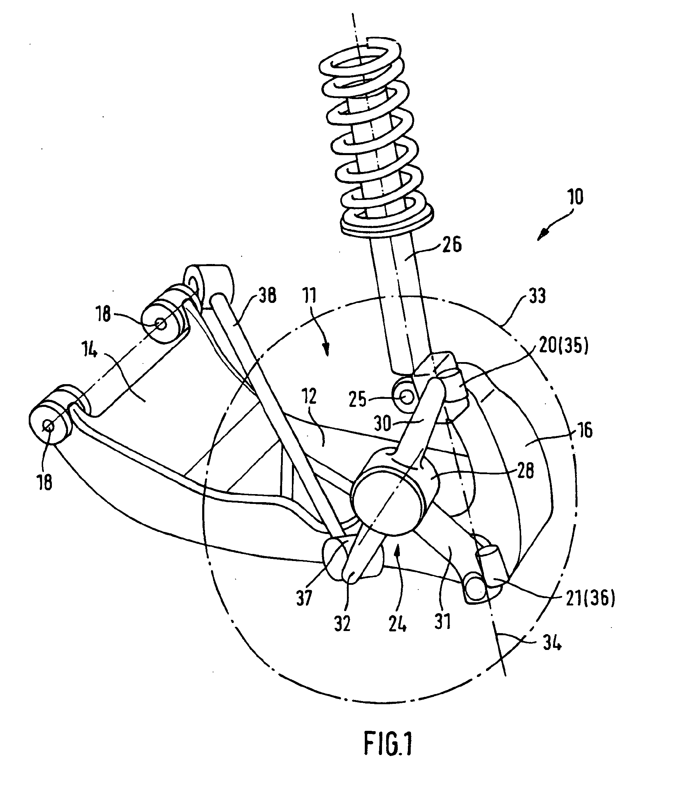

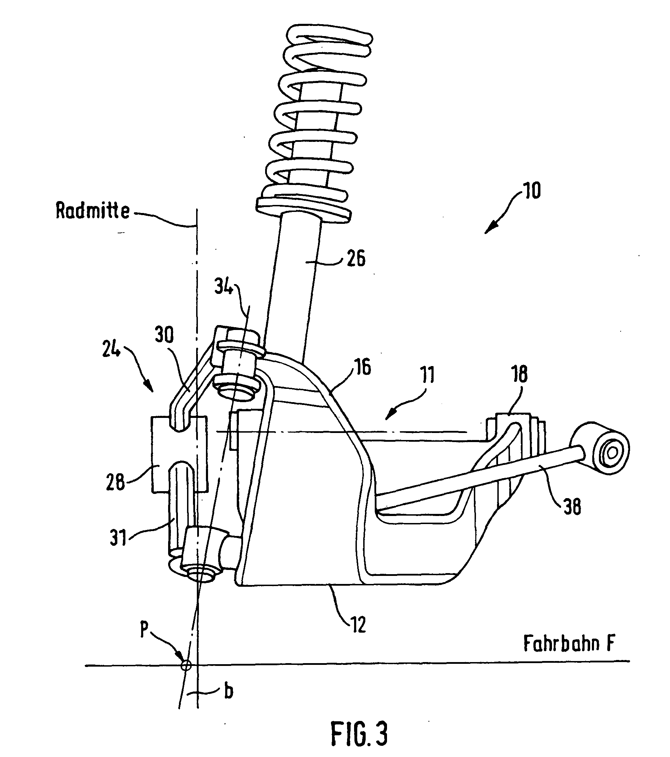

Eine in Fig. 1 insgesamt mit der Bezugsziffer 10 bezeichnete Hinterradaufhängung umfasst einen als geschlossenen Hohlrahmen oder Hohlkörper ausgebildeten trapezförmigen Schräglenker 11 mit einem ebenen Mittelbereich 12 und aus der Ebene des Mittelbereiches hochgebogenen, Anlenkpunkte tragenden Endbereichen 14 und 16. Der in Fahrtrichtung zeigende eine breite Basis des trapezförmigen Schräglenkers bildende bogenförmige Endbereich 14 trägt die Anlenkpunkte 18 für den hier nicht dargestellten Hilfsrahmen, während der eine schmale Basis des trapezförmigen Schräglenkers bildende Endbereich 16 hakenförmig hochgebogen ist und an der einen etwa geradlinigen Seitenfläche - vgl. Fig. 3 -, also seitlich versetzt miteinander fluchtende Anlenkpunkte 20 und 21 für einen Radträger 24 und einen Anlenkpunkt 25 für ein Federbein 26 aufweist.

Der Radträger 24 mit seinem zentralen Achsschenkel 28 weist drei radial nach außen sich erstreckende Lagerarme 30, 31 und 32 auf, von denen die gegeneinander versetzten Lagerarme 30 und 31, die die Schwenkachse 34 des zugeordneten auf dem Achsschenkel gelagerten Rades 33 bestimmenden Lager 35 und 36 tragen, während der Lagerarm 32 das Lager 37 für eine Spurstange 38 trägt.

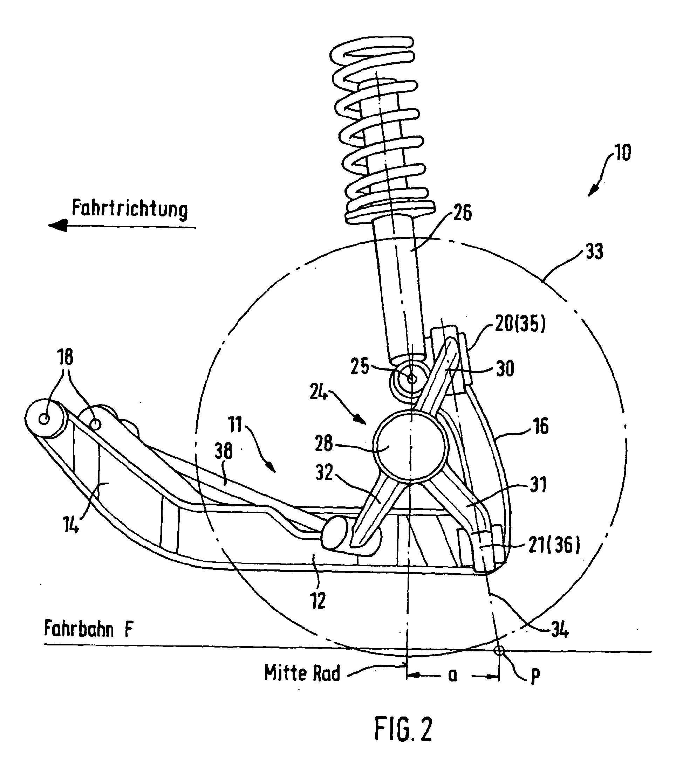

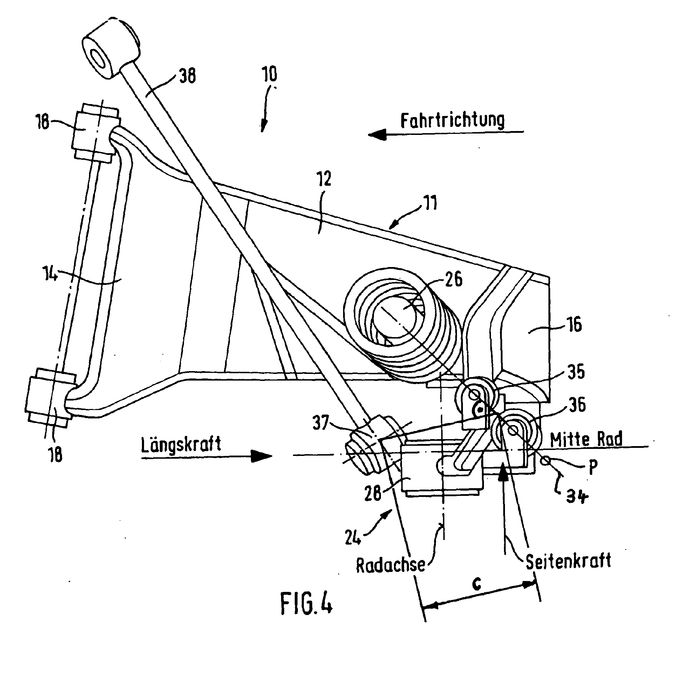

Die die Schwenkachse 34 des Radträgers 24 bestimmenden Lager 35, 36 tragende Lagerarme 31 und 32 sind in Bezug auf die Radmitte - vgl. Fig. 4 - seitlich versetzt in Übereinstimmung mit der seitlichen Versetzung der Anlenkpunkte 20, 21 am Schräglenker, sodass der Durchstoßpunkt P der Schwenkachse 34 von Schräglenker und Radträger durch die Fahrbahn F in Fahrtrichtung des Kraftfahrzeuges, also von der Seite gesehen in einem vorgegebenen Abstand a hinter der Mitte des Rades - vgl. Fig. 2 - und von Vorne gesehen in einem vorgegebenen Abstand b - vgl. Fig. 3 - außerhalb der Mitte des Rades 33 liegt. Die Schwenkachse 34 ist daher von Oben vorne nach Unten hinten und von oben Innen nach unten Außen geneigt; vgl. die genannten Figuren 2 und 4.

Die an den nicht dargestellten Hilfsrahmen angelenkte Spurstange 38 greift in einem Abstand c - vgl. Fig. 4 - zur Schwenkachse 34 am Radträger 24 an; vgl. Fig. 4.

Der Abstand ist der Abstand von der Schwenkachse 34 zum Lager 37 der Spurstange 38. Eine Senkrechte auf die Schwenkachse 34 durch den Mittelpunkt des Lagers 37 der Spurstange 38 ergibt den Abstand C.

Durch die in zwei Ebenen geneigte Schwenkachse 34 des vorstehend beschriebenen den Radträger 24 lagernden Schräglenkers 11 im Zusammenwirken mit der am Hilfsrahmen angreifenden Spurstange 38 wird erreicht, dass der Radträger 24 sein Rad sowohl bei durch Bremsen verursachten Lenkkräften als auch bei durch Kurvenfahrt erzeugten Seitenkräfte stets in die Vorspur lenkt ohne das aktive Stellmittel hierfür vorzusehen sind.

### BEZUGSZEICHENLISTE

- 10: Hinterradaufhängung
- 11: Schräglenker
- 12: Mittelbereich
- 14: Endbericht
- 16: Endbereich
- 18: Anlenkpunkte
- 20: Anlenkpunkte
- 21: Anlenkpunkte
- 24: Radträger
- 25: Anlenkpunkt
- 26: Federbein
- 28: Achsschenkel
- 30: Lagerarme
- 31: Lagerarme
- 32: Lagerarme
- 33: Rad
- 34: Schwenkachse
- 35: Lager
- 36: Lager
- 37: Lager
- 38: Spurstange
- 39: Radachse

- a: Abstand
- b: Abstand
- c: Abstand
- F: Fahrbahn
- P: Durchstoßpunkt

## Patentansprüche

1. Hinterradaufhängung für Kraftfahrzeuge mit einem an einem Hilfsrahmen gelagerten Schräglenker (11) und einem am Schräglenker schwenkbar gelagerten Radträger (24), dessen Schwenkachse (34) zwecks Erzielung eines gewünschten Eigenlenkverhaltens unter Last für das zu lagernde Rad in zwei Ebenen geneigt und der Radträger (24) über eine im Abstand (c) zu seiner Schwenkachse (34) angreifende Spurstange (38) an dem Hilfsrahmen des Kraftfahrzeuges abgestützt ist, **dadurch gekennzeichnet, dass** der Durchstoßpunkt (P) der Schwenkachse (34) zwischen Schräglenker (11) und Radträger(24) durch die Fahrbahn (F) in Fahrtrichtung gesehen in einem vorgegebenen Abstand (a) hinter der Mitte des Rades und von hinten gesehen in einem vorgegebenen Abstand (b) außerhalb der Mitte des Rades liegt, derart dass die Schwenkachse (34) von Oben vorne nach Unten hinten und von oben Innen nach unten Außen geneigt ist.

2. Hinterradaufhängung nach Anspruch 1, **dadurch gekennzeichnet, dass** der Schräglenker (11) als trapezförmiger Hohlkörper mit einem ebenen Mittelbereich (12) ausgebildet ist, an dessen aus der Ebene des Mittelbereiches kreisbogenförmig hochgebogenen Endbereich (14) die dem Hilfsrahmen zugeordneten Anlenkpunkte (18) und an dessen ebenfalls aus der Ebene des Mittelbereiches hakenförmig hochgebogenen Endbereich (16) seitlich versetzt die Anlenkpunkte (20, 21) für den Radträger (24) und den Anlenkpunkt (37) für ein Federbein (26) angeordnet sind.

3. Hinterradaufhängung nach den Ansprüchen 1 und 2, **dadurch gekennzeichnet, dass** der Radträger (24) zwei zwecks Bestimmung der Lage seiner Schwenkachse (34) gegeneinander seitlich versetzte radiale Lagerarme (30, 31) zur Aufnahme der mit den Anlenkpunkten (20, 21) des Schräglenkers (11) korrespondierenden Lager (35, 36) sowie einen ebenfalls radial sich erstreckenden Lagerarm (32) als Träger für das die Spurstange (38) anlenkende Lager (37) aufweist.

4. Hinterradaufhängung nach den Ansprüchen 1 bis 3, **dadurch gekennzeichnet, dass** mittels der durch die Anlenkpunkte (20, 21) des Schräglenkers (11) bestimmten Schwenkachse (34) des Radträgers (24) und durch die Abstützung des am Radträger (24) gelagerten Rades (33) mittels der Spurstange (38) ein gewünschtes Eigenlenkverhalten des Rades (33) unter Last erziel bar ist.

## Claims

1. Rear suspension for motor vehicles, with a transversal link (11) and a wheel bracket (24) pivotably mounted on the transversal link, the pivoting axis of which (34) of which mounting is inclined under load in two planes for the wheel to be mounted to achieve a desired resonant intrinsic steering behaviour, and the wheel bracket (24) is supported by a track rod (38) engaging at distance (c) to its pivoting axis (34) on the auxiliary frame of the motor vehicle, **characterised in that** the piercing point (P) of the pivoting axis (34) between the transversal link (11) and wheel bracket (24) through the road surface (F), viewed in the direction of travel, lies at a predetermined distance (a) between the centre of the wheel, and viewed from the rear, at a predetermined distance (b) outside the centre of the wheel, in such a manner that the pivoting axis (34) is inclined from the top at the front to the bottom at the rear, and from the top inside to the bottom outside.

2. The rear suspension according to Claim 1, **characterised in that** the transversal link (11) is designed as a trapezoid hollow body with a flat central region (12) on whose end region (14), bent upwards in the shape of an arc from the plane of the central region, are arranged the articulation points (18) assigned to the auxiliary frame, and on whose end region (16), also bent upwards in a hook shape from the plane of the central region, are arranged laterally offset the articulation points (20, 21) for the wheel bracket (24) and the articulation point (37) for a spring leg (26).

3. The,rear suspension according to Claims 1 and 2, **characterised in that** the wheel bracket (24) has two radial bearing arms (30, 31), laterally offset with respect to each other for the purpose of determining the position of the pivoting axis (34) of the wheel bracket, for receiving the bearings (35, 36) corresponding to the articulation points (20, 21) of the transversal link (11), as well as a bearing arm (32), also extending radially, as a support for the bearing (37) linking the track rod (38).

4. The rear suspension according to Claims 1 to 3, **characterised in that** a desired resonant intrinsic steering behaviour of the wheel (33) is achievable under load by means of the pivoting axis (34) of the wheel bracket (24) determined by the articulation points (20, 21) of the transversal link (11), and by supporting the wheel (33) mounted on the wheel bracket (24) by means of the track rod (38).

## Revendications

1. Suspension de roue arrière pour véhicules automobiles dotée d'un bras oblique (11) logé sur un sous-châssis et d'un support de roue (24) logé de manière pivotante sur le bras oblique, dont l'axe de pivotement (34) est incliné à deux niveaux afin d'obtenir un comportement autodirectionnel souhaité en charge pour la roue à loger et le support de roue (24) est appuyé par le biais d'une barre d'accouplement (38) étant appliquée à distance (c) de son axe de pivotement (34) sur le sous-châssis du véhicule automobile, **caractérisée en ce que** le point de passage (P) de l'axe de pivotement (34) se trouve entre le bras oblique (11) et le support de roue (24) au travers de la chaussée (F), vu dans le sens de la marche, à une distance prédéterminée (a) derrière le centre de roue et, vu de derrière, à une distance prédéterminée (b) en dehors du centre de roue, de telle sorte que l'axe de pivotement (34) soit incliné de dessus vers l'avant, de dessous vers l'arrière et de dessus vers l'intérieur et de dessous vers l'extérieur.

2. Suspension de roue arrière selon la revendication 1, **caractérisée en ce que** le bras oblique (11) est réalisé comme un corps creux en forme de trapèze avec une zone centrale plane (12), sur la zone finale (14) cambrée en forme d'arc de cercle à partir du plan de la zone centrale de laquelle sont disposés les points d'articulation (18) associés au sous-châssis et sur la zone finale (16) cambrée en forme d'arc de crochet également à partir du plan de la zone centrale de laquelle sont disposés de manière latéralement décalée les points d'articulation (20, 21) pour le support de roue (24) et le point d'articulation (37) pour une jambe de force à ressort (26).

3. Suspension de roue arrière selon les revendications 1 et 2, **caractérisée en ce que** le support de roue (24) présente deux bras de palier (30, 31) radiaux décalés latéralement l'un contre l'autre, destinés à déterminer la position de son axe de pivotement (34) afin de loger des paliers (35, 36) correspondant aux points d'articulation (20, 21) du bras oblique (11) ainsi qu'un bras de palier (32) s'étendant aussi radialement comme support pour le palier (37) articulant la barre d'accouplement (38).

4. Suspension de roue arrière selon les revendications 1 à 3, **caractérisée en ce qu'**au moyen de l'axe de pivotement (34) du support de roue (24), déterminé par les points d'articulation (20, 21) du bras oblique (11) et grâce à l'appui de la roue (33) logée sur le support de roue (24) au moyen de la barre d'accouplement (38), un comportement autodirectionnel souhaité de la roue (33) en charge peut être obtenu.
